# EUROPÄISCHE PATENTSCHRIFT

(11) **EP 3 408 233 B1**
(45) Veröffentlichungstag und Bekanntmachung des Hinweises auf die Patenterteilung: **02.10.2019**
(21) Anmeldenummer: 16809093.4
(22) Anmeldetag: 14.12.2016
(51) Int. Cl.: C03B 23/035, C03B 35/14

(54) **ÜBERDRUCKUNTERSTÜTZTES GLASBIEGEVERFAHREN UND HIERFÜR GEEIGNETE VORRICHTUNG**
OVER-PRESSURE ASSISTED GLASS BENDING METHOD AND DEVICE SUITED FOR CARRYING OUT THIS METHOD
PROCEDE DE CINTRAGE DE VERRE ASSISTE PAR SURPRESSION ET DISPOSITIF ADAPTE

(30) Priorität: 28.01.2016 EP 16153047
(43) Veröffentlichungstag der Anmeldung: 05.12.2018
(73) Patentinhaber: Saint-Gobain Glass France, 92400 Courbevoie (FR)
(72) Erfinder: SCHALL, Günther, 52372 Kreuzau (DE); BALDUIN, Michael, 52477 Alsdorf (DE); RADERMACHER, Herbert, 4730 Raeren (BE); LE NY, Jean-Marie, 4851 Gemmenich (BE)
(74) Vertreter: Feist, Florian Arno
(86) Internationale Anmeldenummer: PCT/EP2016/080918
(87) Internationale Veröffentlichungsnummer: WO 2017/129307

(56) Entgegenhaltungen:
- DE-T2- 69 219 496
- US-A- 3 473 909
- US-A- 5 203 905
- US-A- 5 938 810
- US-A1- 2009 000 334
- US-A1- 2014 230 493

## Beschreibung

Die Erfindung betrifft ein überdruckunterstütztes Biegeverfahren für Glasscheiben, eine hierfür geeignete Vorrichtung sowie die Verwendung einer Membran in einem solchen Biegeverfahren.

Verglasungen für Kraftfahrzeuge weisen typischerweise eine Biegung auf. Es sind verschiedene Verfahren zur Erzeugung einer solchen Biegung bekannt. Beim sogenannten Schwerkraftbiegen (auch *gravity bending* oder *sag bending*) wird die im Ausgangszustand plane Glasscheibe auf der Auflagefläche einer Biegeform angeordnet und auf mindestens ihre Erweichungstemperatur erwärmt, so dass sie sich unter dem Einfluss der Schwerkraft an die Auflagefläche anlegt. Bei den sogenannten Pressbiegeverfahren wird die Scheibe zwischen zwei komplementären Werkzeugen angeordnet, die gemeinsam auf die Scheibe wirken, um die Biegung zu erzeugen. Beim Pressbiegen im engeren Sinne ist dies eine Presswirkung zwischen den Werkzeugen. Bei Saugbiegeverfahren übt mindestens eines der Werkzeuge eine Saugwirkung auf die Scheibe aus, um die Verformung zu erreichen oder zu unterstützen.

Um komplexe Scheibenformen zu verwirklichen, kommen häufig mehrstufige Biegeverfahren zum Einsatz. Typischerweise wird in einem ersten Biegeschritt mittels Schwerkraftbiegen eine Vorbiegung erzeugt, während die endgültige Form in einem zweiten Biegeschrift - häufig mittels Pressbiegen beziehungsweise Saugbiegen - erzeugt wird. Solche mehrstufige Biegeverfahren sind beispielsweise aus EP 1 836 136 A1, EP 1 358 131 A1, EP 2 463 247 A1, EP 2 463 248 A1, US 2004107729 A1, EP 0 531 152 A2 und EP 1 371 616 A1 bekannt.

Es sind auch überdruckunterstütze Biegeverfahren bekannt. So kann das Schwerkraftbiegen dadurch beschleunigt werden, dass von oben ein Überdruck ausgeübt wird, der die Glasschiebe gleichsam in die Schwerkraftbiegeform hineindrückt. So können geringere Biegetemperaturen und/oder kürzere Biegezyklen erreicht werden. So schlägt die EP 0 706 978 A2 ein Schwerkraftbiegeverfahren vor, bei dem mit einem oberen Formgebungswerkzeug ein Luftstrom auf die Glasscheibe geleitet wird, um den Überdruck zu erzeugen.

Einige Verglasungen für Fahrzeuge sind als Verbundsicherheitsglaser ausgeführt, insbesondere Windschutzscheiben. Diese bestehen aus zwei Glasscheibe, die über eine polymere Zwischenschicht miteinander laminiert sind. Es kann hierbei vorteilhaft sein, die beiden Glasscheiben gemeinsam kongruent zu biegen, um ihre Biegung optimal aufeinander abzustimmen. Solche Verfahren sind beispielsweise aus EP 1 358 131 A1, EP 2 463 247 A1, EP 2 463 248 A1, EP1 836 136 A1, EP 0 531 152 A2 und EP 1 611 064 A1 bekannt.

Bei solchen paarweisen Biegeverfahren gilt es, eine Trennung der beiden Glasscheiben, also die Ausbildung eines Spalts zwischen den Scheiben während des Biegeverfahrens zu vermeiden. Dies gilt in besonderem Maße im Zusammenhang mit Saugbiegeverfahren, da der auf eine Scheibenoberfläche wirkende Unterdruck eine solche Spaltbildung besonders begünstigt. Um der Gefahr der Spaltbildung zu begegnen, kann gegenüberliegend der Saugwirkung ein Überdruck angelegt werden, um die beiden Scheiben aneinander zu drücken. So wird in KR 101 343 631 B1 vorgeschlagen, die untere Scheibe durch Saugen zu verformen und zeitgleich die obere Scheibe mit einem Luftstrom zu beaufschlagen.

Den vorstehend beschriebenen überdruckunterstützten Biegeverfahren ist gemeinsam, dass zur Erzeugung des Überdrucks die zu biegende Glasscheibe direkt mit einem Luftstrom beaufschlagt wird. Dies birgt allerdings die Gefahr, dass die Oberfläche der Glasscheibe unerwünscht beeinflusst wird, was insbesondere zu Einbußen an der optische Qualität der Glasscheibe führen kann. So kann das inhomogene Beaufschlagen mit dem Luftstrom, wie es beispielsweise die Verwendung von Düsen zur Folge hat, zu einem inhomogenen Transmissionsverhalten der Scheibe führen, was für Fensterscheiben nicht erwünscht und nur in sehr geringem Maße akzeptabel ist.

US 3,473,909 A offenbart eine Vorrichtung und ein Verfahren zum Biegen einer Glaslinse unter Verwendung einer Membran, mittels derer die Glaslinse in eine untere Biegeform hineingepresst wird.

Der vorliegenden Erfindung liegt die Aufgabe zugrunde, ein verbessertes überdruckunterstütztes Biegeverfahren für Glasscheiben, insbesondere Fensterscheiben, und eine dafür geeignete Vorrichtung bereitzustellen. wobei die vorstehend beschriebenen Nachteile vermieden werden. Insbesondere soll eine Beeinträchtigung der optischen Qualität der Glasscheibe infolge der Beaufschlagung mit Überdruck vermieden werden.

Die Aufgabe der Erfindung wird erfindungsgemäß gelöst durch eine Vorrichtung zum Biegen von mindestens einer Glasscheibe gemäß Anspruch 1, mindestens umfassend
- eine untere Biegeform mit einer Wirkfläche, die dazu geeignet ist, die Form mindestens einer Glasscheibe zu beeinflussen,
- ein oberes Formgebungswerkzeug gegenüberliegend der Wirkfläche angeordnet, das dazu geeignet ist, einen Überdruck auf der von der Wirkfläche abgewandten Oberfläche der mindestens einen Glasscheibe zu erzeugen,
wobei das obere Formgebungswerkzeug einen Hohlraum aufweist mit mindestens einer auf die untere Biegeform gerichteten Öffnung und einer die Öffnung verschließenden Membran und mit Mitteln ausgestattet ist, ein Gas in den Hohlraum einzuleiten, um die Membran in Richtung der unteren Biegeform zu verformen und dadurch den Überdruck zu erzeugen.

Unter einer Membran wird im Sinne der Erfindung ein flächiges Element aus einem flexiblen Material verstanden, welches (unter den typischen Einsatzbedingungen) elastisch verformbar ist in Richtung der Flächennormalen.

Die Aufgabe der Erfindung wird außerdem gelöst durch ein Verfahren zum Biegen mindestens einer Glasscheibe gemäß Anspruch 10, mindestens umfassend die folgenden Verfahrensschritte:
(a) Anordnen mindestens einer auf mindestens ihre Erweichungstemperatur erwärmten Glasscheibe zwischen einer unteren Biegeform und einem oberen Formgebungswerkzeug,
   wobei das obere Formgebungswerkzeug gegenüberliegend einer Wirkfläche der unteren Biegeform angeordnet ist und einen Hohlraum aufweist mit mindestens einer auf die untere Biegeform gerichteten Öffnung und einer die Öffnung verschließenden Membran,
(b) Einleiten eines Gases in den Hohlraum, wodurch die Membran in Richtung der unteren Biegeform verformt wird, so dass die Membran die von der Auflagefläche abgewandte Oberfläche der mindestens einen Glasscheibe kontaktiert, dadurch einen Druck ausübt und einen Überdruck auf der besagten Oberfläche erzeugt,
(c) Abkühlen der Glasscheibe.

Die Vorrichtung und das Verfahren werden im Folgenden gemeinsam vorgestellt, wobei sich Erläuterungen und bevorzugte Ausgestaltungen gleichermaßen auf Vorrichtung und Verfahren beziehen.

Die Erfindung umfasst auch eine Anordnung zum Biegen mindestens einer Glasscheibe, umfassend die erfindungsgemäße Vorrichtung und eine Glasscheibe, die zwischen dem unteren Biegewerkzeug und dem oberen Formgebungswerkzeug positioniert ist.

Das mit der erfindungsgemäßen Vorrichtung durchzuführende Biegeverfahren kann als überdruckunterstütztes Biegeverfahren bezeichnet werden. Die Formung der Glasscheibe durch die untere Biegeform wird dadurch unterstützt, dass von oben ein Überdruck auf die Glasscheibe ausgeübt wird. Durch den Überdruck kann eine schnellere Biegung erreicht werden. Beim simultanen Biegen mehrerer gestapelter Glasscheiben kann die Ausbildung eines Spalts zwischen den Scheiben verhindert werden. Der Überdruck wird erfindungsgemäß mittels einer flexiblen Membran erzeugt. Dies hat sich als vorteilhaft schonende Vorgehensweise erwiesen, wodurch negative Beeinträchtigungen der Glasscheibe vermieden werden können, insbesondere Beeinträchtigungen der Oberflächenqualität und der optischen Eigenschaften. Das ist ein großer Vorteil der vorliegenden Erfindung. Aufgrund der Flexibilität der Membran passt sie sich stets an die von der Wirkfläche der unteren Biegeform vorgegebene Scheibenform an. Das erfindungsgemäße obere Formgebungswerkzeug muss daher nicht auf die jeweilige Scheibenform abgestimmt werden, sondern kann gleichsam als universelles Werkzeug für eine Vielzahl verschiedener Scheibenformen eingesetzt werden.

Die erfindungsgemäße Vorrichtung zum Biegen von mindestens einer Glasscheibe umfasst mindestens eine untere Biegeform und ein oberes Formgebungswerkzeug. Die zu biegende Glasscheibe wird zwischen der unteren Biegeform und dem oberen Formgebungswerkzeug angeordnet. Die Glasscheibe kann dazu beispielsweise auf der unteren Biegeform abgelegt werden oder vom oberen Formgebungswerkzeug angesaugt werden.

Unter einer unteren Biegeform wird im Sinne der Erfindung eine Form verstanden, welche die untere, dem Erdboden zugewandten Oberfläche der Glasscheibe berührt beziehungsweise ihr zugeordnet ist und auf sie wirkt. Unter einer oberen Biegeform wird eine Form verstanden, die der oberen, vom Erdboden abgewandte Oberfläche der Glasscheibe zugeordnet ist und auf sie wirkt.

Die untere Biegeform weist eine Wirkfläche auf, welche die Glasscheibe zugeordnet ist und zur Formung der Glasscheibe auf diese wirkt. Die Wirkfläche ist dazu geeignet, die Form der mindestens einen Glasscheibe zu beeinflussen. Die Wirkfläche kann auch als Auflagefläche oder Kontaktfläche bezeichnet werden, weil sie dazu geeignet ist, mindestens eine Glasscheibe darauf anzuordnen beziehungsweise mit der Glasscheibe in Kontakt zu stehen. Die Wirkfläche legt die Form der gebogenen Glasscheibe fest. Typischerweise steht zu Beginn des Biegeschritts nur ein Teil der Wirkfläche mit der Glasscheibe in Kontakt und die Glasscheibe legt sich im Laufe des Biegeschritts an die Wirkfläche an. Dies kann unter Einwirkung der Schwerkraft, eines Pressdrucks oder einer Saugwirkung erfolgen. Die Wirkfläche kann in unmittelbarem Kontakt zur Glasscheibe stehen. Die Wirkfläche kann aber auch beispielsweise mit einem Gewebe versehen sein, welches zwischen der eigentlichen Wirkfläche und der Glasscheibe angeordnet ist.

Die vorliegende Erfindung ist nicht auf eine bestimmte Art von Wirkfläche beschränkt. Die Wirkfläche ist bevorzugt konkav ausgebildet. Unter einer konkaven Form wird dabei eine Form verstanden, bei der die Ecken und Ränder der Glasscheibe im bestimmungsgemäßen Kontakt mit der Wirkfläche in Richtung von der Biegeform weg gebogen sind.

In einer Ausgestaltung nicht gemäß der Erfindung weist die untere Biegeform eine vollflächige Wirkfläche auf. Eine solche Wirkfläche kann auch als massiv bezeichnet werden und steht am Ende des Biegeschrittes mit einem Großteil der Scheibenfläche in Kontakt - im Gegensatz zu den sogenannten rahmenartigen Wirkflächen. In einer besonders bevorzugten Ausgestaltung ist die vollflächige Wirkfläche mit Löchern oder Öffnungen ausgestattet, durch die eine Saugwirkung auf die der Wirkfläche zugewandten Oberfläche der mindestens einen Glasscheibe ausgeübt werden kann. Eine solche Biegeform ist insbesondere für einen Saugbiegeschritt geeignet. Es kann auch verwendet werden, um im Randbereich einen Pressdruck auszuüben und im Zentralbereich eine Saugwirkung. Die Vorrichtung umfasst in diesem Fall außerdem Mittel zum Erzeugen einer Saugwirkung, die mit der Wirkfläche verbunden sind, beispielsweise Venturi-Düsen, Ventilatoren oder Pumpen. Eine solche untere Biegeform kann auch als Saugbiegeform bezeichnet werden. Die untere Biegeform entspricht in dieser Ausgestaltung insbesondere der unteren Form ("forme inferieur 5,12"), die in EP 1 836 136 A1 beschrieben ist.

Gemäß der Erfindung weist die untere Biegeform eine rahmenartige Wirkfläche auf. Lediglich die rahmenartige Wirkfläche steht mit der Glasscheibe in direktem Kontakt, während der größte Teil der Scheibe keinen direkten Kontakt zum Werkzeug hat. Dadurch lassen sich Scheiben mit besonders hoher optische Qualität erzeugen. Ein solches Werkzeug kann auch als Ring (Biegering) oder Rahmen (Rahmenform) bezeichnet werden. Der Begriff "rahmenartige Wirkfläche" im Sinne der Erfindung dient lediglich zur Abgrenzung gegenüber einer vollflächigen Form. Die Wirkfläche muss keinen vollständigen Rahmen bilden, sondern kann auch unterbrochen sein. Die Wirkfläche ist in Form eines vollständigen oder unterbrochenen Rahmens ausgebildet. Die untere Form ist als Schwerkraftbiegeform ausgebildet. Die Scheibe wird auf die Schwerkraftbiegeform abgelegt, so dass die Wirkfläche (Auflagefläche) die untere, dem Erdboden zugewandte Oberfläche der Glasscheibe berührt. Üblicherweise steht der Randbereich der Glasscheibe umlaufend über die Wirkfläche über. Wird die Glasscheibe auf mindestens ihre Erweichungstemperatur erhitzt, so legt sie sich unter dem Einfluss der Schwerkraft an die Wirkfläche an, wodurch die gewünschte Form erreicht wird. Die rahmenartige Wirkfläche kann aber auch für Pressbiegeverfahren verwendet werden.

Der Vorteil der rahmenartigen Wirkfläche gegenüber der vollflächigen Wirkfläche liegt in der höheren optischen Qualität der gebogenen Scheibe. Es war für den Fachmann überraschend, dass das erfindungsgemäße Verfahren auch unter Verwendung einer solchen rahmenartigen Wirkfläche ausgeführt werden kann, obwohl im Zentralbereich der Scheibe kein Gegendruck zum durch die Membran ausgeübten Druck vorliegt. Dennoch ist die zuverlässige und reproduzierbare Biegung von Glasscheiben möglich.

Die Breite der rahmenförmigen Wirkfläche beträgt bevorzugt von 0,1 cm bis 20 cm, besonders bevorzugt von 0,1 cm bis 5 cm, beispielsweise 0,3 cm.

Grundsätzlich sind, nicht gemäß der Erfindung, auch Kombinationen der vorstehend beschriebenen Arten von Wirkflächen denkbar, beispielsweise eine vollflächige Wirkfläche im Zentralbereich, die von einer rahmenartigen Wirkfläche umgeben ist.

Die von der unteren Biegeform abgewandte Oberfläche der Glasscheibe wird erfindungsgemäß mittels der Membran des oberen Formgebungswerkzeugs mit einem Überdruck beaufschlagt. Die von der unteren Biegeform abgewandte Oberfläche der Glasscheibe kann auch als obere Oberfläche bezeichnet werden, und die der unteren Biegeform zugewandte Oberfläche als untere Oberfläche. Unter einem Überdruck wird im Sinne der Erfindung ein Druck verstanden, welcher höher ist als der Umgebungsdruck.

Durch den Überdruck wird die erweichte Glasscheibe gleichsam in die unteren Biegeform hineingedrückt.

Das obere Formgebungswerkzeug ist während des Biegevorgangs gegenüberliegend der Wirkfläche der unteren Biegeform angeordnet, so dass eine Glasscheibe zwischen der unteren Biegeform und dem oberen Formgebungswerkzeug angeordnet werden kann. Es ist dazu geeignet, einen Überdruck auf der von der Auflagefläche abgewandten Oberfläche der auf der Auflagefläche angeordneten Glasscheibe zu erzeugen.

Es sind verschiedene Ausführungen des oberen Formgebungswerkzeugs denkbar. Ihnen ist gemeinsam, dass das Formgebungswerkzeug einen Hohlraum aufweist. Der Hohlraum ist kein abgeschlossener Hohlraum. So ist das Formgebungswerkzeug zum einen mit Mitteln ausgestattet, ein Gas in den Hohlraum einzuleiten, die insbesondere ein in den Hohlraum mündendes Einströmrohr oder eine Einströmöffnung umfassen. Zum anderen weist der Hohlraum mindestens eine weitere Öffnung auf, die auf die untere Biegeform gerichtet ist.

Das Formgebungswerkzeug weist außerdem eine Membran auf, welche die auf die untere Biegeform gerichtete mindestens eine Öffnung abdeckt oder verschließt. Wird Gas in den Hohlraum eingeleitet und dort ein Überdruck erzeugt, so wird die Membran elastisch in Richtung der unteren Biegeform verformt. Durch den direkten Kontakt der Membran mit der oberen Oberfläche der Glasscheibe wird der erfindungsgemäße Überdruck auf der Glasscheibe erzeugt.

In einer vorteilhaften Ausgestaltung weist das obere Formgebungswerkzeug eine Abdeckung auf mit einem Randabschnitt, der die Öffnung umgibt. Das Formgebungswerkzeug ist in diesem Fall nicht als Form mit vollflächiger Kontaktfläche, sondern als Hohlform ausgebildet. Die Abdeckung ist beispielsweise aus einem Metallblech gefertigt. Die Abdeckung ist so geformt, dass sie den Hohlraum ausbildet, wobei die auf die untere Biegeform gerichtete Öffnung eine einzige großflächige Öffnung ist. Man kann das Werkzeug auch als glockenartig oder haubenartig bezeichnen. Die Membran verschließt den glockenartigen Hohlraum. Die Membran ist typischerweise im Bereich des Randabschnitts befestigt.

Der Randabschnitt der Abdeckung ist bevorzugt in bestimmungsgemäßer Anordnung des Formgebungswerkzeugs nach unten gerichtet. Der Randabschnitt ist besonders bevorzugt im Wesentlichen vertikal angeordnet. Dadurch kann das Formgebungswerkzeug vorteilhaft mit der Glasscheibe in Kontakt gebracht werden. Der nach unten gerichtete Randabschnitt wird häufig auch als Schürze bezeichnet. Die Seitenkante der Abdeckung kann am Ende des nach unten gerichteten Randabschnitts angeordnet sein und nach unten weisen. Es beeinträchtigt die Funktion aber nicht, wenn beispielsweise das Ende des Randabschnitts umgebogen ist, so dass die Seitenkante nicht nach unten weist.

Wird das obere Formgebungswerkzeug auf die Glasscheibe abgesenkt, so liegt ein Teil dieses Formgebungswerkzeugs bevorzugt auf der Glasscheibe auf, wobei eventuell die Membran zwischen diesem Teil und der Glasscheibe angeordnet ist. Der besagte Teil des Formgebungswerkzeugs wird daher als Kontaktfläche bezeichnet. Die Kontaktfläche kann durch die Seitenkante oder einen Endabschnitt der Abdeckung ausgebildet werden oder eigens an der Abdeckung im Bereich der Seitenkante angebracht sein.

Die Materialstärke des oberen Formgebungswerkzeugs beziehungsweise seiner Abdeckung in der haubenartigen Ausgestaltung beträgt bevorzugt höchstens 5 mm auf, besonders bevorzugt von 2 mm bis 4 mm. Durch diese geringen Materialstärken kann das Gewicht des Formgebungswerkzeugs gering gehalten werden.

Das Formgebungswerkzeug muss aber nicht haubenartig ausgebildet sein. In einer weiteren vorteilhaften Ausgestaltung weist das obere Formgebungswerkzeug eine auf die untere Biegeform gerichtete, den Hohlraum begrenzende Wand auf, in welche eine Mehrzahl von Öffnungen eingebracht ist. Das obere Formgebungswerkzeug ist in diesem Fall als Vollform ausgebildet, umfassend eine haubenartige Abdeckung und eine die Öffnung dieser haubenartigen Abdeckung verschließenden Wand, die mit Öffnungen oder Löchern versehen ist. Die vom Hohlraum abgewandte Oberfläche der besagten Wand bildet in diesem Fall die Kontaktfläche aus, mit bevorzugt auf die Scheibe abgesenkt wird. Die Membran bedeckt diese Kontaktfläche und wird durch das durch die Öffnungen strömende Gas von der Wand weggedrückt und dehnt sich aus. Die Größe der Öffnungen beträgt bevorzugt von 20 mm² bis 700 mm², besonders bevorzugt von 30 mm² bis 100 mm². Der Flächenanteil der Öffnungen beträgt bevorzugt von 5 bis 50 % der Gesamtfläche der Wand (die auch die Fläche der Öffnungen beinhaltet), besonders bevorzugt von 10 % bis 30 %. Damit wird eine besonders gleichmäßige Verformung der Membran erreicht.

Die Materialstärke des oberen Formgebungswerkzeugs beziehungsweise seiner Abdeckung in der Ausgestaltung als Vollform beträgt bevorzugt von 10 mm bis 30 mm.

Das obere Formgebungswerkzeug beziehungsweise seine Abdeckung ist in beiden Ausgestaltungen bevorzugt aus Stahl oder Edelstahl gefertigt.

Die Kontaktfläche des oberen Formgebungswerkzeugs ist bevorzugt komplementär zur Wirkfläche der unteren Biegeform ausgebildet. Da die untere Biegeform bevorzugt eine konkave Wirkfläche aufweist, ist die Kontaktfläche des oberen Formgebungswerkzeugs bevorzugt konvex ausgebildet.

Der Überdruck sollte auf einem möglichst großen Anteil der Oberfläche der Glasscheibe erzeugt werden. Zumindest sollte der Überdruck erzeugt werden auf den Bereichen der Glasscheibe, die (im gebogenen Zustand) auf der Wirkfläche der unteren Biegeform aufliegen, sowie gemäß der rahmenartigen Wirkfläche den von ihr umschlossenen Bereich. Beispielsweise kann die Membran mit mindestens 80% oder mindestens 90 % der Oberfläche der zu biegenden Glasschiebe in Kontakt stehen und auf diese wirken, um den Überdruck zu erzeugen, wobei die nicht mit der Membran kontaktierten und daher nicht mit Überdruck beaufschlagten Bereiche der Oberfläche in ihrem Randbereich angeordnet sind, insbesondere umlaufend.

In einer vorteilhaften Ausgestaltung ist das obere Formgebungswerkzeug dazu geeignet, die zu biegende mindestens eine Glasscheibe zu halten. So kann das obere Formgebungswerkzeug neben dem Erzeugen des erfindungsgemäßen Überdrucks auch dazu verwendet werden, die mindestens eine Scheibe anzuheben und zu bewegen. Zum Halten der Glasscheibe wird bevorzugt eine Saugwirkung ausgeübt, welche die Glasscheibe an das obere Formgebungswerkzeug andrückt. Diese Saugwirkung wird besonders bevorzugt durch die sogenannte Schürzentechnologie erzeugt, welche nachfolgend beschrieben wird.

Bei der Schürzentechnologie ist der mit der Membran versehene Teil des oberen Formgebungswerkzeugs, der zur Erzeugung des Überdrucks notwendig ist, sowie der Kontaktbereich oberhalb der Scheibenfläche angeordnet in dem Sinne, dass die Projektion der Membranfläche in die Ebene der (im Ausgangszustand planen) Glasscheibe vollständig innerhalb der Scheibenfläche angeordnet ist - die Membran steht also nicht über die Scheibenfläche über. In diesem Fall kann ein (insbesondere umlaufender) Randbereich der Scheibenfläche existieren, der nicht mit der Membran in Kontakt kommt. Wird das obere Formgebungswerkzeug auf die Glasscheibe abgesenkt, so liegt seine Kontaktfläche auf der Glasscheibe auf, wobei eventuell die Membran zwischen der Kontaktfläche und der Glasscheibe angeordnet ist.

Das Formgebungswerkzeug weist zur Erzeugung der Saugwirkung ein peripheres Luftleitblech auf, welches die Kontaktfläche, die Membran und die erfindungsgemäße Öffnung zum Hohlraum zumindest bereichsweise umgibt. Ein solches Luftleitblech wird häufig auch als Schürze bezeichnet. Das Luftleitblech umgibt oder umrahmt die Kontaktfläche und die Öffnung vollständig oder abschnittsweise. Während des Biegevorgangs weist das Luftleitblech bevorzugt einen Abstand zu den Seitenkanten der Glasscheibe von 3 mm bis 50 mm auf, besonders bevorzugt von 5 mm bis 30 mm, beispielsweise 20 mm auf.

Die Saugwirkung, die zum Halten der Glasscheibe an der Kontaktfläche des oberen Formgebungswerkzeugs nötig ist, wird durch Absaugen der Luft zwischen Luftleitblech und Kontaktfläche (und der sie tragenden Abdeckung des erfindungsgemäßen Hohlraums) erzeugt. Dies ist geeignet, die Kante der zu biegenden Glasscheibe zumindest abschnittsweise mit einem Luftstrom zu bestreichen und dadurch die Glasscheibe an die Kontaktfläche anzudrücken. Die Vorrichtung umfasst Mittel zur Erzeugung eines Unterdrucks beziehungsweise einer Saugwirkung, beispielsweise Ventilatoren, Venturi-Düsen oder Pumpen, die dem Luftleitblech zugeordnet sind. Der erzeugte Luftstrom wird durch das Luftleitblech so gelenkt, dass die Seitenkante der Glasscheibe zumindest abschnittsweise bestrichen wird. Durch das Luftleitblech und die Mittel zur Erzeugung der Saugwirkung ist das Formgebungswerkzeug geeignet, den Rand der mindestens einen Glasscheibe mit einem Luftstrom zu bestreichen. Durch den Luftstrom wird die Glasscheibe wirksam am Formgebungswerkzeug gehalten und an die Kontaktfläche angedrückt beziehungsweise angesaugt. Die Glasscheibe wird durch den die Kante bestreichenden Luftstrom entgegen der Wirkung der Schwerkraft am Formgebungswerkzeug gehalten. ein oberes Werkzeug mit Schürzentechnologie ist beispielsweise in EP 1 836 136 A1 beschrieben ("forme superieure 11").

In einer bevorzugten Ausgestaltung ist die Membran gasdurchlässig. Dies bewirkt eine Art Druckausgleich, so dass der Druck unmittelbar oberhalb und unterhalb der Membran annähernd derselbe ist. Dadurch kann vermieden werden, dass Abdrücke der Membran auf der Glasoberfläche entstehen, welche die optische Qualität der Scheibe herabsetzen würden. Die Membran darf natürlich nicht in einem Maße gasdurchlässig sein, dass sie dem Luftstrom keinen Wiederstand entgegen setzt und somit nicht aufgebläht und verformt wird. Das geeignete Maß an Gasdurchlässigkeit kann vom Fachmann den Erfordernissen des Einzelfalls entsprechend gewählt werden, beispielsweise durch Simulationen oder einfache Vorversuche.

Die Membran ist bevorzugt aus einem Filz, Vlies oder Gewebe gefertigt. Durch die Beschaffenheit, insbesondere Dichte des Filzes, Vlieses oder Gewebes kann die Gasdurchlässigkeit beeinflusst werden.

Das Filz, Vlies oder Gewebe ist bevorzugt metallhaltig, besonders bevorzugt edelstahlhaltig. Der Filz, Vlies oder Gewebe ist bevorzugt ein Edelstahlfilz, Edelstahlvlies oder Edelstahlgewebe. Diese Materialien weisen einerseits eine für eine industrielle Massenfertigung ausreichende Stabilität auf und sind andererseits ausreichend weich, um die Glasoberfläche nicht zu beschädigen.

Die Membran weist bevorzugt eine Dicke (Materialstärke) von 0,5 mm bis 10 mm auf, besonders bevorzugt von 1 mm bis 5 mm, ganz besonders bevorzugt von 2 mm bis 3 mm. In diesem Bereich wird ein vorteilhafter Kompromiss zwischen Stabilität und Flexibilität der Membran erreicht. Außerdem ist die Membran hinreichend dünn und leicht, um Abdrücke auf der Glasscheibe zu vermeiden.

Die erfindungsgemäße Vorrichtung erfasst außerdem Mittel, um die untere Biegeform und das obere Formgebungswerkzeug gegeneinander zu bewegen. Dadurch werden die untere Biegeform und das Formgebungswerkzeug, nachdem die Glasscheibe zum Biegen positioniert worden ist, einander angenähert, so dass das sie gemeinsam auf die Glasscheibe wirken können. Die Annäherung kann durch vertikale Bewegung der unteren Biegeform, des oberen Formgebungswerkzeugs oder beiden erfolgen.

Die erfindungsgemäße Vorrichtung erfasst außerdem Mittel zum Heizen der Glasscheibe auf Erweichungstemperatur. Typischerweise sind die untere Biegeform und das obere Formgebungswerkzeug innerhalb eines beheizbaren Biegeofens oder einer beheizbaren Biegekammer angeordnet. Die Glasscheibe kann zum Erwärmen eine gesonderte Kammer durchlaufen, beispielsweise einen Tunnelofen.

Der Überdruck wird erzeugt, indem ein Gas in den Hohlraum des Formgebungswerkzeugs eingeleitet wird. Das Gas ist in einer bevorzugten Ausführung Luft, insbesondere Druckluft, weil diese kostengünstig zu erzeugen ist. Es können aber prinzipiell auch andere Gase verwendet werden, beispielsweise Kohlendioxid oder Stickstoff. Das Gas kann auf beliebige Weise in den Hohlraum befördert werden, beispielsweise durch Venturi-Düsen, einen Ventilator oder eine Pumpe.

Das einströmende Gas ist bevorzugt erwärmt, um die Glasscheibe beim Biegeprozess, der typischerweise bei erhöhten Temperaturen stattfindet, nicht abzukühlen. Die Temperatur des Gases entspricht bevorzugt in etwa der Temperatur der Glasscheibe.

Im Hohlraum ist bevorzugt ein Prallblech gegenüberliegend dem Rohrauslass angeordnet, so dass einströmendes Gas auf das Prallblech trifft. Dadurch wird verhindert, dass einströmendes Gas direkt auf die Glasscheibe trifft und es kann im gesamten Hohlraum ein homogener Überdruck erzeugt werden.

Das erfindungsgemäße Verfahren ist in einer Vielzahl möglicher Varianten ausführbar. So kann das Anordnen der erweichten Glasscheibe zwischen der unteren Biegeform und dem oberen Formgebungswerkzeug durchgeführt werden, indem die Glasscheibe durch das obere Formgebungswerkzeug gehalten, insbesondere angesaugt wird und anschließend die untere Biegeform relativ zum oberen Formgebungswerkzeug bewegt und dadurch von unten an die Glasscheibe angenähert wird. Dieses Vorgehen ist insbesondere bei Press- und Saugbiegeverfahren sinnvoll. Das Erwärmen der Glasscheibe auf Erweichungstemperatur kann erfolgen, während die Glasscheibe bereits am oberen Formgebungswerkzeug fixiert ist, oder in einem vorgelagerten Schritt, wobei die Glasscheibe erst im erwärmten Zustand durch das obere Formgebungswerkzeug übernommen wird.

Alternativ kann die Glasscheibe auf die Wirkfläche (Auflagefläche) der unteren Biegeform aufgelegt werden und anschließend das obere Formgebungswerkzeug relativ zur unteren Biegeform bewegt und dadurch von oben an die Glasscheibe angenähert wird. Dieses Vorgehen ist bei Press- und Saugbiegeverfahren und insbesondere bei Schwerkraftbiegevorfahren sinnvoll. Das Erwärmen der Glasscheibe auf Erweichungstemperatur kann erfolgen, nachdem die Scheibe auf die untere Biegeform aufgelegt wurde, oder in einem vorgelagerten Schritt, wobei die Glasscheibe erst im erwärmten Zustand auf der unteren Biegeform abgelegt wird. Bei Schwerkraftbiegeverfahren ist es üblich, die Glasscheibe auf der unteren Biegeform (Schwerkraftbiegeform) zu erwärmen.

Der Überdruck, der durch die Membran auf die Glasscheibe ausgeübt wird, beträgt in einer vorteilhaften Ausführung von 10 mbar bis 50 mbar, bevorzugt von 20 mbar bis 30 mbar. Damit werden gute Ergebnisse erzielt - die Formung der Scheibe wird wirksam beschleunigt und Beeinträchtigungen der Oberfläche können vermieden werden. Mit Überdruck wird die positive Druckdifferenz zum Umgebungsdruck bezeichnet.

Prinzipiell kann die Glasscheibe auch schon während des Erwärmens mit dem Überdruck beaufschlagt werden. Der Überdruck kann seine Wirkung zwar erst nach Erreichen der Erweichungstemperatur entfalten, aus verfahrenstechnischen Gründen kann es aber einfacher sein, den Überdruck schon vorher zu erzeugen.

In einer vorteilhaften Ausführung ist das erfindungsgemäße obere Formgebungswerkzeug mit der vorstehen beschriebenen Schürzentechnologie zum Ansaugen der Glasscheibe ausgestattet, insbesondere in der vorstehend beschriebenen haubenartigen Ausführung des oberen Formgebungswerkzeugs. Die Glasscheibe wird durch das obere Formgebungswerkzeug von einer ersten unteren Form übernommen, indem das obere Formgebungswerkzeug an die erste untere Form angenähert wird, die Glasscheibe angesaugt wird und das obere Formgebungswerkzeug mit der Glasscheibe wieder von der ersten unteren Form entfernt wird.

In einer besonders bevorzugten Ausführung ist die besagte erste untere Form eine Schwerkraftbiegeform mit konkaver, rahmenartiger Kontaktfläche, auf der die Glasscheibe auf Erweichungstemperatur erwärmt und durch Schwerkraftbiegen vorgebogen wurde. Die Schwerkraftbiegeform ist typischerweise beweglich ausgebildet, beispielsweise auf einem Wagen gelagert. Die Schwerkraftbiegeform durchläuft zum Erwärmen einen Ofen, wobei die Glasscheibe auf Biegetemperatur erwärmt wird, und wird dann unter das obere Formgebungswerkzeug transportiert.

Im Rahmen einer industriellen Massenfertigung ist es vorteilhaft, eine Mehrzahl solcher beweglicher Schwerkraftbiegeformen miteinander zu verbinden zu einem sogenannten Wagenzug. Der Wagenzug durchläuft einen Ofen zum Erwärmen der Scheiben auf Biegetemperatur und fährt in eine Biegekammer ein mit der erfindungsgemäßen unteren Biegeform und dem oberen Formgebungswerkzeug. Die Glasscheiben werden dann in der Biegekammer durch das obere Formgebungswerkzeug von der Schwerkraftbiegeform aufgenommen. Durch eine räumliche Trennung des Aufwärmens und des überdruckunterstützen Biegens in verschiedenen Kammern eines Biegeofens können höhere Taktzeiten erreicht werden, als wenn die Scheibe erst in der Biegekammer erwärmt wird.

Es ist alternativ auch möglich, die erste untere Form (insbesondere Schwerkraftbiegeform mit rahmenartiger Kontaktfläche) und die erfindungsgemäße untere Biegeform in einem einzigen Werkzeug zu kombinieren. Die beiden Formen müssen dann vertikal gegeneinander bewegbar sein, so dass eingestellt werden kann, auf welcher der Auflageflächen die Glasscheibe aufliegt. So ist eine direkte Übergabe der Scheibe von der ersten unteren Form auf die erfindungsgemäße untere Biegeform möglich, ohne dass die Scheibe durch ein oberes Werkzeug angehoben werden muss.

In einer vorteilhaften Ausführung wird eine erfindungsgemäße untere Biegeform an die am oberen Formgebungswerkzeug gehaltene Glasscheibe angenähert. Dazu ist es besonders bevorzugt, das obere Formgebungswerkzeug mit der Glasscheibe vertikal nach oben zu bewegen, anschließend die untere Biegeform horizontal unter das obere Formgebungswerkzeug zu bewegen und anschließend das obere Formgebungswerkzeug vertikal auf die untere Biegeform abzusenken. Die nötige Horizontalbewegung kann alternativ aber auch durch das obere Formgebungswerkzeug oder einer Bewegung von Biegeform und Formgebungswerkzeug erfolgen.

Die untere Biegeform kann dabei in der vorstehend beschriebenen Weise als Saugbiegeform mit einer mit Öffnungen versehenen vollflächigen Wirkfläche nicht gemäß der Erfindung ausgebildet sein.

Die zu biegende mindestens eine Glasscheibe wird in ihrem Randbereich zwischen der Kontaktfläche des oberen Formgebungswerkzeugs und der Wirkfläche der unteren Biegeform gepresst. Der Zentralbereich der Glasscheibe wird mittels der Saugwirkung der unteren Biegeform an die Wirkfläche angesaugt. Während die Glasscheibe zwischen der unteren Biegeform und dem oberen Formgebungswerkzeug fixiert ist, kann die die Glasscheibe haltende Saugwirkung des oberen Formgebungswerkzeugs abgeschaltet oder auch aufrechterhalten werden.

Die Saugwirkung, die durch die untere Biegeform auf die Glasscheibe ausgeübt wird, beträgt bevorzugt von 100 mbar bis 200 mbar, besonders bevorzugt von 120 mbar bis 150 mbar.

Das Abkühlen der Glasscheibe kann auf beliebige Art erfolgen. Die Glasscheibe kann dabei auf der erfindungsgemäßen unteren Biegeform angeordnet sein, am erfindungsgemäßen oberen Formgebungswerkzeug gehalten werden oder auch auf einer weiteren Form angeordnet sein, auf die die Scheibe übergeben wurde. Das Abkühlen kann bei Umgebungstemperatur oder durch aktive Kühlung erfolgen. Die weitere untere Form kann beispielsweise die gleiche Form sein oder vom gleichen Typ sein wie die erste untere Form zum Schwerkraftvorbiegen. So kann der gleiche Wagenzug verwendet werden, um einerseits die Scheiben vorzubiegen und in die Pressbiegekammer hinein zu transportieren und andererseits die Scheiben aus der Pressbiegekammer heraus zu transportieren und abzukühlen.

Die erfindungsgemäße Vorrichtung kann auch mehrere obere Formgebungswerkzeuge und/oder mehrere untere Biegeformen umfassen. Die Vorrichtung kann neben der erfindungsgemäßen unteren Biegeform und dem erfindungsgemäßen oberen Formgebungswerkzeug ein Hebewerkzeug umfassen, welches beispielsweise mit der Schürzentechnologie ausgestattet ist. Dadurch ist es möglich, einen Biegevorgang zu beginnen, bevor der vorhergehende Biegevorgang komplett abgeschlossen ist, wodurch höhere Taktzeiten erreicht werden können. Beispielsweise kann die folgende Abfolge gewählt werden:
- Anheben der Scheibe von der Schwerkraftbiegeform durch das Hebewerkzeug
- Bewegen der unteren Biegeform unter das Hebewerkzeug und Ablegen der Scheibe auf die untere Biegeform
- Bewegen der unteren Biegeform mit der Scheibe unter das obere Formgebungswerkzeug
- Biegen der Scheibe zwischen der unteren Biegeform und dem oberen Formgebungswerkzeug
- Abheben der Scheibe von der unteren Biegeform durch das obere Formgebungswerkzeug
- Bewegen der unteren Biegeform unter das Hebewerkzeug, welches in der Zwischenzeit eine weitere Scheibe von der nächsten Schwerkraftbiegeform abgehoben hat
- Ablegen der Scheibe vom oberen Formgebungswerkzeug auf die Schwerkraftbiegeform. Ein solches Verfahren ist in EP 1 836 136 A1 im Zusammenhang mit den Figuren 4a - 4d beschrieben.

Die zu biegenden Glasscheiben sind insbesondere als Fahrzeugscheiben (Fahrzeug-Fensterscheiben), bevorzugt Kraftfahrzeugscheiben vorgesehen oder als Bestandteile davon. Sie weisen typischerweise eine Größe von mindestens 0,8 m² auf, bevorzugt von 1 m² bis 3 m².

Die zu biegenden Glasscheiben bestehen in einer bevorzugten Ausführung aus Kalk-Natron-Glas, wie es für Fensterscheiben üblich ist. Typische Biegetemperaturen betragen dabei von 500 °C bis 700 °C, bevorzugt von 550 °C bis 650 °C, beispielsweise etwa 630 °C. Die zu biegenden Glasscheiben können aber auch andere Glassorten wie Borsilikatglas oder Quarzglas enthalten. Die Dicke der Glasscheibe beträgt typischerweise von 0,2 mm bis 10 mm, bevorzugt 0,5 mm bis 5 mm.

Das erfindungsgemäße Verfahren ist insbesondere auch geeignet, mehrere, beispielsweise zwei aufeinander liegende Glasscheiben simultan kongruent zu biegen. Dies kann insbesondere gewünscht sein, wenn zwei oder mehrere Einzelscheiben später zu einem Verbundglas laminiert werden sollen, um ihre Form optimal aufeinander abzustimmen. Die Glasscheiben werden dazu flächig aufeinander angeordnet und gemeinsam gebogen. Zwischen den Glasscheiben wird ein Trennmittel angeordnet, beispielsweise ein Trennpuder oder ein Gewebe, so dass die Glasscheiben nach dem Biegen wieder voneinander gelöst werden können. In einer vorteilhaften Ausführung wird das Verfahren auf mehrere aufeinander liegende Glasscheiben angewandt, insbesondere zwei aufeinander liegende Glasscheiben, und die Glasscheiben werden paarweise simultan gebogen.

Das Verfahren kann, nicht gemäß der Erfindung, ein Verfahren sein, welches in EP 1 836 136 A1 detailliert beschrieben ist, wobei das obere Formgebungswerkzeug in seiner haubenartigen Ausgestaltung mit Luftleitblech anstelle der dort beschriebenen oberen Form ("forme superieure 11") eingesetzt wird. Die untere Biegeform ist die dort beschrieben untere Form ("forme inferieure 5, 12"). Das Verfahren wird bevorzugt mittels der Vorrichtung durchgeführt, die in EP 1 836 136 A1 detailliert beschrieben ist, wobei ebenfalls das Werkzeug anstelle der dort beschriebenen oberen Form ("forme superieure 11") eingesetzt wird und die untere Biegeform ist die dort beschrieben untere Form ("forme inferieure 5, 12") ist.

Die Erfindung umfasst außerdem die Verwendung einer Membran zur Erzeugung eines Überdrucks auf einer Oberfläche einer Glasscheibe während eines Biegeprozesses, wobei die Membran eine Öffnung eines Hohlraums eines Formgebungswerkzeugs verschließt und wobei der Überdruck erzeugt wird, indem die Membran durch ein in den Hohlraum eingeleitetes Gas in Richtung der Glasscheibe verformt wird und die Oberfläche der Glasscheibe dadurch kontaktiert.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Fig. 1: einen Querschnitt durch eine erfindungsgemäße Vorrichtung während des erfindungsgemäßen Verfahrens,
- Fig. 2: einen Querschnitt durch eine Ausgestaltung des erfindungsgemäßen oberen Formgebungswerkzeugs,
- Fig. 3: einen Querschnitt durch eine weitere Ausgestaltung des erfindungsgemäßen oberen Formgebungswerkzeugs,
- Fig. 4: einen Querschnitt durch eine weitere Ausgestaltung des erfindungsgemäßen oberen Formgebungswerkzeugs,
- Fig. 5: einen Querschnitt durch eine weitere Ausgestaltung einer Vorrichtung während eines Verfahrens nicht gemäß der Erfindung,
- Fig. 6: eine schrittweise Darstellung eines Verfahrens nicht gemäß der Erfindung und
- Fig. 7: ein Flussdiagramm einer Ausführungsform des erfindungsgemäßen Verfahrens.

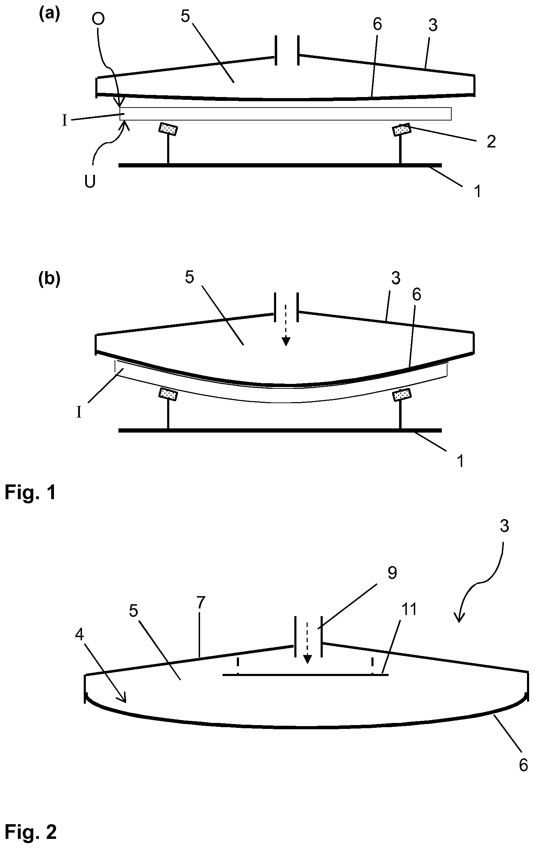

Figur 1 zeigt eine erfindungsgemäße Vorrichtung während des erfindungsgemäßen Verfahrens zum Biegen einer Glasscheibe I. Figur 2 zeigt eine detaillierte Darstellung des oberen Formgebungswerkzeugs 3 aus Fig. 1.

Die im Ausgangszustand plane Glasscheibe I wird auf einer unteren Biegeform 1 abgelegt (Fig. 1a). Die untere Biegeform ist eine Schwerkraftbiegeform mit einer rahmenartigen, konkaven Wirk- oder Auflagefläche 2. Wie beim Schwerkraftbiegen üblich wird die Glasscheibe I auf eine Biegetemperatur erwärmt, die mindestens der Erweichungstemperatur entspricht. Die erweichte Glasscheibe I schmiegt sich daraufhin unter dem Einfluss der Schwerkraft an die Auflagefläche 2 an (Fig. 1b).

Das Schwerkraftbiegen wird durch ein oberes Formgebungswerkzeug 3 unterstützt, welches einen Überdruck auf der von der Auflagefläche 2 abgewandten, nach oben weisenden Oberfläche O der Glasscheibe I. Das obere Formgebungswerkzeug 3 weist eine glocken- oder haubenartige Abdeckung 7 auf, die einen Hohlraum 5 mit einer großflächigen Öffnung 4 ausbildet, die auf die Glasscheibe I gerichtet ist. Ein Randabschnitt der Abdeckung 7 umrahmt die Öffnung 4. Der Hohlraum 5 ist verschlossen durch eine Membran 6, die am Randabschnitt der Abdeckung 7 angebracht ist.

Die Abdeckung 7 ist aus einem nur 3 mm starken Stahlblech gebildet, wodurch das Formgebungswerkzeug 3 nur ein geringes Gewicht aufweist.

Das obere Formgebungswerkzeug 3 ist mit einem Einströmrohr 9 ausgestattet, über das Gas, zum Beispiel erwärmte Druckluft, in den Hohlraum 5 einfließen kann. Die flexible Membran 6 dehnt sich aus und wird in Richtung der Glasscheibe I verformt. Die Membran 6 drückt die Glasscheibe in die untere Biegeform 1, so dass die gewünschte Scheibenform schneller erreicht wird als bei reinem Schwerkraftbiegen. Im Hohlraum 5 der Öffnung des Einströmrohrs 6 gegenüberliegend ist ein Prallblech 11 angeordnet, auf das die einströmende Luft trifft. So wird ein homogenerer Überdruck im Hohlraum 5 erzeugt.

Die Membran ist aus einem Edelstahl-Filz gefertigt mit einer Materialstärke von 3 mm. Der Filz ist in gewissem Maße gasdurchlässig, wo dass die Druckluft durch die Membran 6 aus dem Hohlraum 5 austreten kann. Dadurch wird die Druckdifferenz direkt ober- und unterhalb der Membran verringert, wodurch Abdrücke auf der Glasoberfläche O vermieden werden können.

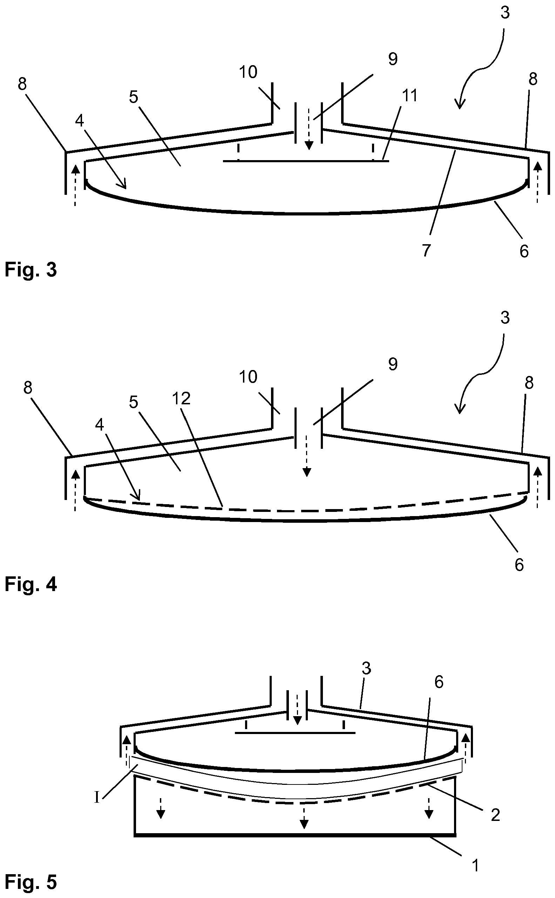

Figur 3 zeigt eine weitere Ausgestaltung des erfindungsgemäßen oberen Formgebungswerkzeugs 3. Das Formgebungswerkzeug 3 ist ähnlich wie in Fig. 2 gestaltet, wobei es allerdings so bemessen ist, dass die Abdeckung 7 nicht über die Seitenkante der Glasscheibe I übersteht. Ein umlaufender Randabschnitt der zu biegenden Glasscheibe I wird daher nicht mit der Membran 6 in Kontakt gebracht und mit Überdruck beaufschlagt.

Das obere Formgebungswerkzeug 3 weist außerdem ein die Abdeckung 7 umgebendes Luftleitblech 8 auf. Über ein Ansaugrohr 10 kann die Luft aus dem Zwischenraum zwischen Luftleitblech 8 und Abdeckung 7 abgesaugt werden und ein aufwärts gerichteter Luftstrom erzeugt werden. Das Formgebungswerkzeug 3 ist so ausgelegt, dass dieser Luftstrom die Seitenkante der zu biegenden Glasscheibe I bestreicht. So kann die Glasscheibe I an die an der Seitenkante der Abdeckung 7 angeordnete Kontaktfläche des Formgebungswerkzeugs 3 angesaugt werden und im Rahmen eines mehrstufigen Biegeprozesses beispielweise gehalten oder transportiert werden. Diese Technik wird auch als Schürzentechnik bezeichnet. Die Kontaktfläche des Formgebungswerkzeugs 3 kann konvex ausgebildet sein, insbesondere wenn die Wirkfläche 2 der unteren Biegeform 1 konkav ausgebildet ist.

Figur 4 zeigt eine weitere Ausgestaltung des erfindungsgemäßen oberen Formgebungswerkzeugs 3. Im Unterschied zu den vorstehend beschriebenen Ausgestaltungen weist das Formgebungswerkzeug 3 nicht eine einzelne, großflächige Öffnung 4 auf, sondern eine zusätzliche konvexe Wand 12, die auf die untere Biegeform 1 und die Glasscheibe I gerichtet ist und den Hohlraum 5 begrenzt. In diese Wand ist eine Vielzahl von Öffnungen 4 eingebracht, über welche das in den Hohlraum 5 einströmende Gas austreten kann um die Membran 6 zu verformen, welche die vom Hohlraum 5 abgewandte Oberfläche der Wand 12 bedeckt. Die Größe der Öffnungen 4 beträgt beispielsweise 50 mm². Der Flächenanteil der Öffnungen 4 beträgt beispielsweise 20 % der Gesamtfläche der Wand 12 (inklusive der Fläche der Öffnungen 4). Die Materialstärke des Formgebungswerkzeugs beträgt beispielsweise 20 mm.

Auch hier weist das Formgebungswerkzeug wie in Fig. 3 ein Ansaugrohr 10 samt Luftleitblech 8 auf.

Figur 5 zeigt eine weitere Ausgestaltung einer Vorrichtung während eines Verfahrens nicht gemäß der Erfindung. Das obere Formgebungswerkzeug ist gemäß Fig. 3 ausgestaltet. Im Unterschied zu Fig. 1 weist die untere Biegeform 1 keine rahmenartige Wirkfläche 2 auf, sondern eine vollflächige konkave Wirkfläche 2, die dafür vorgesehen ist, mit einem Großteil der Scheibenoberfläche U in Kontakt zu kommen. Die untere Biegeform 1 ist keine Schwerkraftbiegeform, sondern ein Werkzeug zum Press- und Saugbiegen. Die Glasscheibe I wird in ihrem Randbereich zwischen der Kontaktfläche des oberen Formgebungswerkzeugs 3 und der Wirkfläche 2 gepresst. Auf den von diesem Randbereich umgebene Zentralbereich der Glasscheibe I wird eine Saugwirkung ausgeübt, die über Öffnungen in der Wirkfläche 2 auf die Scheibenoberfläche U übertragen wird. Durch die kombinierte Press- und Saugwirkung wird die Glasscheibe I sehr schnell und effizient in die durch die Wirkfläche 2 vorgegebene Form gebogen. Die Saugwirkung wird hier unterstützt durch den Druck der Membran 6.

In der Figur ist auch zu sehen, wie der durch das Luftleitblech 8 erzeugte Luftstrom die Seitenkante der Glasscheibe I bestreicht. So kann die Glasscheibe I beispielsweise am Formgebungswerkzeug 3 gehalten werden, während es an die untere Biegeform 1 angenähert wird.

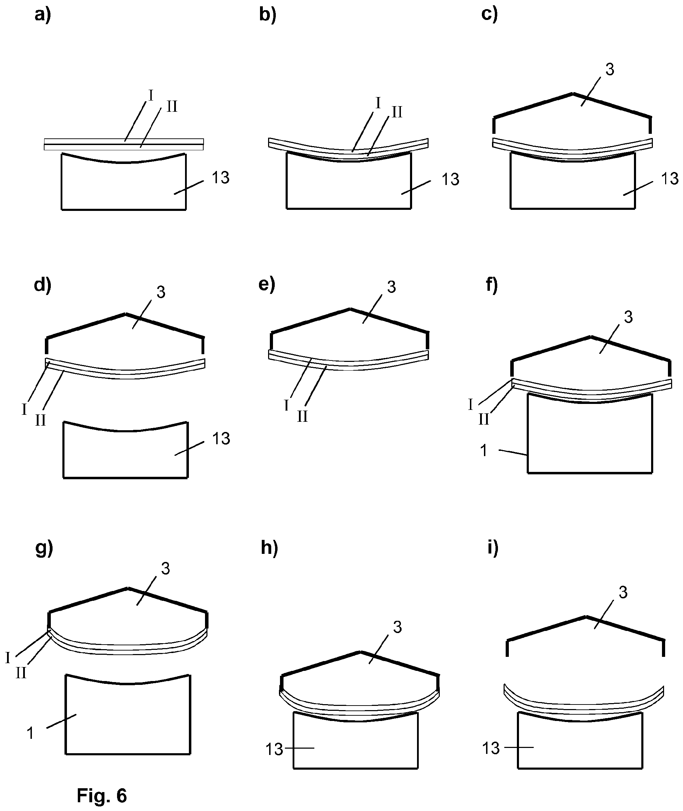

Figur 6 zeigt schematisch die Schritte einer Ausführungsform eines Verfahrens nicht gemäß der Erfindung. Zunächst werden zwei aufeinander liegende Glasscheiben I, II, welche im Ausgangszustand plan sind, auf einer Vorbiegeform 13 positioniert, die als Schwerkraftbiegeform mit einer rahmenartigen konkaven Auflagefläche ausgebildet ist (Teil a). Die Scheiben auf der Vorbiegeform 13 werden auf Biegetemperatur, beispielsweise 600 °C, erwärmt und schmiegen sich infolge der Schwerkraft an die Form der unteren Biegeform 9 an (Teil b). Die Glasscheiben I, II werden also mittels Schwerkraftbiegen vorgebogen. Die Vorbiegeform 13 ist dazu bevorzugt beweglich gelagert und mit anderen Vorbiegeformen zu einem Wagenzug verbunden. Die Vorbiegeform 13 durchläuft einen nicht dargestellten Tunnelofen, um auf Biegetemperatur erwärmt zu werden und fährt dann in eine ebenfalls nicht dargestellte Biegekammer ein, in der die Vorrichtung angeordnet ist.

In besagter Biegekammer werden die Glasscheiben I, II vom erfindungsgemäßen oberen Formgebungswerkzeug 3 übernommen. Dazu wird das Formgebungswerkzeug 3 von oben an die Glasscheiben I, II auf der Vorbiegeform 13 angenähert (Teil c). Das Formgebungswerkzeug 3 ist wie in Fig. 3 ausgestaltet. Mittels der dort beschriebenen Schürzentechnik werden die Glasscheiben I, II an die rahmenartige konvexe Kontaktfläche des Formgebungswerkzeugs 3 angesaugt. Das Formgebungswerkzeug 3 wird dann nach oben bewegt, wobei die die Glasscheiben I, II von der am Biegewerkzeug 1 gehalten und können von diesem nach oben bewegt und damit von der Vorbiegeform 13 abgehoben werden (Teil d). Nachdem die Glasscheiben I, II von der Vorbiegeform 13 übernommen wurden (Teil e), wird die untere Biegeform 1 horizontal unter das Formgebungswerkzeug 3 bewegt und das Formgebungswerkzeug 3 auf diese Biegeform 1 abgesenkt (Teil f). Die untere Biegeform 1 ist wie in Fig. 5 ausgebildet, als kombinierte Press- und Saugbiegeform. Die Glasscheiben I, II werden zwischen dem erfindungsgemäßen Formgebungswerkzeug 3 und der Biegeform 1 wie zu Fig. 5 beschrieben in ihre endgültige Form gebogen. Das Formgebungswerkzeug 3 wird anschließend wieder von der unteren Biegeform 1 abgehoben (Teil g) und die untere Biegeform 1 wird horizontal wegbewegt. Das Formgebungswerkzeug 3 wird anschließend wieder abgesenkt und die Glasscheiben I, II werden wieder auf die Vorbiegeform 13 abgelegt und durch Ausschalten der Saugwirkung auf diese Vorbiegeform 13 übergeben (Teil h). Das Formgebungswerkzeug 3 wird dann nach oben bewegt (Teil i) und ist für den Biegeprozess des nächsten Scheibenpaares bereit. Die Glasscheiben I, II werden auf der beweglichen Vorbiegeform 13 aus der Biegekammer heraustransportiert und kühlen auf der Vorbiegeform 13 auf Umgebungstemperatur ab.

Die hier schematisch dargestellten Verfahrensschritte geben das in EP 1 836 136 A1 detaillierter beschriebene Verfahren wieder, wobei die dort verwendete obere Form (forme superieure 11) durch das erfindungsgemäße obere Formgebungswerkzeug 3 ersetzt wurde. Die erfindungsgemäße Membran 6 bewirkt eine weiter verbesserte Effizienz des Verfahrens.

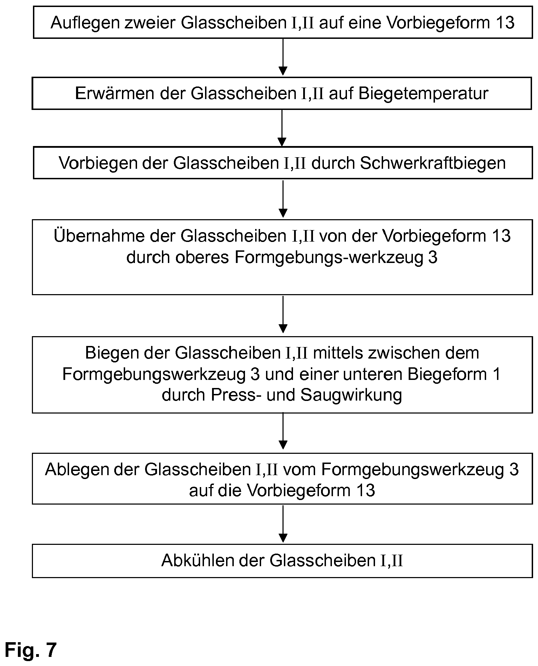

Figur 7 zeigt das Beispiel gemäß Fig. 6 anhand eines Flussdiagramms.

### Beispiel

In einer Versuchsreihe wurden verschiedene Biegeprozesse miteinander verglichen. Die Biegeprozesse wurden auf einer Schwerkraftbiegeform durchgeführt (untere Biegeform 1) mit einer rahmenartigen Auflagefläche 2, auf der die Glasscheibe I angeordnet war. Die Glasscheibe I wurden jeweils auf die Temperatur T erwärmt und es wurde die Verformungsgeschwindigkeit v gemessen. Die Biegeprozesse unterschieden sich in der Ausgestaltung des oberen Formgebungswerkzeugs:
1. Reines Schwerkraftbiegen ohne Beaufschlagen mit Überdruck (kein oberes Formgebungswerkzeug 3)
2. Schwerkraftbiegen unter Verwendung eines oberen Formgebungswerkzeugs in der haubenartigen Ausgestaltung mit einer einen Hohlraum 5 ausbildenden Abdeckung 7, jedoch ohne Membran 6, so dass die Glasscheibe I direkt mit dem Luftstrom beaufschlagt wurde
3. Erfindungsgemäßes Schwerkraftbiegen unter Verwendung eines haubenartigen oberen Formgebungswerkzeugs 3 mit Membran 6 (Ausgestaltung der Figur 2)

Bei den Beispielen 2 und 3 wurde Luft mit der gleichen Geschwindigkeit in den Hohlraum 5 eingeleitet.

Anschließend wurden die optischen Eigenschaften der gebogenen Scheibe untersucht. Dazu wurde die Brechkraft der Scheibe ortsaufgelöst gemessen im Hauptsichtfeld der Scheibe. Es wurden der Maximalwert (*limit value, max value*) und die Änderungsrate (*rate of change, RoC;* Differenz zwischen Maximum und Minimum in einem quadratischen Messfeld mit einer Größe von 80mm x 80 mm) bestimmt, beides sind insbesondere im Fahrzeugbereich gebräuchliche Werte zur Beurteilung der optischen Qualität und dem Fachmann geläufig. Je geringer der gemessene Wert, desto verzerrungsfreier die Scheibe und desto besser entsprechend die optische Qualität der Scheibe.

Die Ergebnisse sind in Tabelle 1 zusammengefasst.

**Tabelle 1**

| | Biegeprozess | *T* | *v* | *limit value* | *RoC* |
|---|---|---|---|---|---|
| 1 | reines Schwerkraftbiegen | 630 °C | 0,1 mm/s | | |
| 2 | Schwerkraftbiegen mit direktem Beaufschlagen mit Luftstrom | 630 °C | 1 mm/s | 85 mdpt | 100 mdpt |
| 3 | **Erfindungsgemäß:** Schwerkraftbiegen mit oberem Formgebungswerkzeug mit Membran | 630 °C | 2,8 mm/s | 50 mdpt | 85 mdpt |

Wie der Tabelle zu entnehmen ist, kann durch das erfindungsgemäße Verfahren eine deutliche Zeitersparnis erreicht werden - die Biegegeschwindigkeit ist bei Verwendung der erfindungsgemäßen Membran bei sonst gleichen Versuchsbedingungen deutlich größer als bei direktem Beaufschlagen mit einem Luftstrom und erst recht als beim reinen Schwerkraftbiegen. Zugleich ist die Beeinträchtigung der optischen Qualität deutlich geringer als beim direkten Beaufschlagen mit dem Luftstrom. Diese Ergebnisse waren für den Fachmann unerwartet und überraschend.

### Bezugszeichenliste:

- (1): untere Biegeform
- (2): Wirkfläche/Auflagefläche der unteren Biegeform 1

- (3): oberes Formgebungswerkzeug
- (4): Öffnung des Hohlraums 5
- (5): Hohlraum des Formgebungswerkzeugs 3
- (6): Membran des Formgebungswerkzeugs 3
- (7): Abdeckung des Formgebungswerkzeugs 3
- (8): Luftleitblech des Formgebungswerkzeugs 3
- (9): Einströmrohr des Formgebungswerkzeugs 3
- (10): Ansaugrohr des Formgebungswerkzeugs 3
- (11): Prallblech des Formgebungswerkzeugs 3
- (12): auf die untere Biegeform 1 gerichtete, den Hohlraum 5 begrenzende Wand des Formgebungswerkzeugs 3

- (13): Vorbiegeform / Schwerkraftbiegeform

- (I): Glasscheibe
- (O): obere Oberfläche der Glasscheibe I, von der Auflagefläche 2 abgewandt
- (U): untere Oberfläche der Glasscheibe I, der Auflagefläche 2 zugewandt

## Patentansprüche

1. Vorrichtung zum Biegen von mindestens einer Glasscheibe (I) mit einer Größe von mindestens 0,8 m², insbesondere einer Fahrzeugscheibe, mindestens umfassend
- eine untere Biegeform (1) mit einer Wirkfläche (2), die dazu geeignet ist, die Form mindestens einer Glasscheibe (I) zu beeinflussen, wobei die untere Biegeform (1) als Schwerkraftbiegeform mit einer rahmenartigen Wirkfläche (2) ausgebildet ist,
- ein oberes Formgebungswerkzeug (3) gegenüberliegend der Wirkfläche (2) angeordnet, das dazu geeignet ist, einen Überdruck auf der von der Wirkfläche (2) abgewandten Oberfläche (O) der mindestens einen Glasscheibe (I) zu erzeugen,
wobei das obere Formgebungswerkzeug (3) einen Hohlraum (5) aufweist mit mindestens einer auf die untere Biegeform (1) gerichteten Öffnung (4) und einer die Öffnung (4) verschließenden Membran (6) und mit Mitteln ausgestattet ist, ein Gas in den Hohlraum (5) einzuleiten, um die Membran (6) in Richtung der unteren Biegeform (1) zu verformen und dadurch den Überdruck zu erzeugen.

2. Vorrichtung nach Anspruch 1, wobei die Membran (6) gasdurchlässig ist.

3. Vorrichtung nach Anspruch 1 oder 2, wobei die Membran (6) aus einem Filz, Vlies oder Gewebe gefertigt ist.

4. Vorrichtung nach Anspruch 3, wobei die Membran (6) metallhaltig ist, bevorzugt edelstahlhaltig.

5. Vorrichtung nach einem der Ansprüche 1 bis 4, wobei die Membran (6) eine Dicke von 0,5 mm bis 10 mm aufweist, bevorzugt von 1 mm bis 5 mm, besonders bevorzugt von 2 mm bis 3 mm.

6. Vorrichtung nach einem der Ansprüche 1 bis 5, wobei die untere Biegeform (1) eine vollflächige Wirkfläche (2) aufweist, die mit Öffnungen ausgestattet ist, um eine Saugwirkung auf die der Wirkfläche (2) zugewandten Oberfläche (U) der mindestens einen Glasscheibe (I) auszuüben.

7. Vorrichtung nach einem der Ansprüche 1 bis 6, wobei das obere Formgebungswerkzeug (3) eine Abdeckung (7) aufweist, die den Hohlraum (5) ausbildet, mit einem Randabschnitt, der die Öffnung (4) umgibt.

8. Vorrichtung nach einem der Ansprüche 1 bis 6, wobei das obere Formgebungswerkzeug (3) eine auf die untere Biegeform (1) gerichtete, den Hohlraum (5) begrenzende Wand (12) aufweist, in welche die Öffnungen (4) eingebracht sind.

9. Vorrichtung nach einem der Ansprüche 1 bis 8, wobei das obere Formgebungswerkzeug (3) ein die Öffnung (4) umgebendes Luftleitblech (8) aufweist und diesem zugeordnete Mittel zur Erzeugung einer Saugwirkung, so dass das Formgebungswerkzeug (3) dazu geeignet ist, den Rand der mindestens Glasscheibe (I) mit einem Luftstrom zu bestreichen, um die mindestens Glasscheibe (I) an das obere Formgebungswerkzeug (3) anzusaugen.

10. Verfahren zum Biegen mindestens einer Glasscheibe (I) mit einer Größe von mindestens 0,8 m², mindestens umfassend die folgenden Verfahrensschritte:
(a) Anordnen mindestens einer auf mindestens ihre Erweichungstemperatur erwärmten Glasscheibe (I) zwischen einer unteren Biegeform (1) und einem oberen Formgebungswerkzeug (3), wobei die untere Biegeform (1) als Schwerkraftbiegeform mit einer rahmenartigen Wirkfläche (2) ausgebildet ist und wobei das obere Formgebungswerkzeug (3) gegenüberliegend der Wirkfläche (2) der unteren Biegeform (1) angeordnet ist und einen Hohlraum (5) aufweist mit mindestens einer auf die untere Biegeform (1) gerichteten Öffnung (4) und einer die Öffnung (4) verschließenden Membran (6),
(b) Einleiten eines Gases in den Hohlraum (5), wodurch die Membran (6) in Richtung der unteren Biegeform (1) verformt wird, so dass die Membran (6) die von der Wirkfläche (2) abgewandte Oberfläche (O) der mindestens einen Glasscheibe (I) kontaktiert und einen Überdruck auf der besagten Oberfläche (O) erzeugt,
(c) Abkühlen der Glasscheibe (I).

11. Verfahren nach Anspruch 10, wobei der Überdruck von 10 mbar bis 50 mbar beträgt, bevorzugt von 20 mbar bis 30 mbar.

12. Verfahren nach Anspruch 10 oder 11, wobei
- die Glasscheibe (I) vor Schritt (a) auf einer Schwerkraftbiegeform (13) vorgebogen wird,
- das obere Formgebungswerkzeug (3) eine Abdeckung (7) aufweist, die den Hohlraum (5) ausbildet, mit einem Randabschnitt, der die Öffnung (4) umgibt, und ein die Öffnung (4) umgebendes Luftleitblech (8) und diesem zugeordnete Mittel zur Erzeugung einer Saugwirkung,
- die Glasscheibe (I) in Schritt (a) mit dem oberen Formgebungswerkzeug (3) von der Schwerkraftbiegeform angehoben wird, indem das Formgebungswerkzeug (3) den Rand der Glasscheibe (I) mit einem Luftstrom bestreicht,
- die untere Biegeform (1) eine vollflächige Wirkfläche (2) aufweist, die mit Öffnungen ausgestattet ist, durch die eine Saugwirkung auf die der Wirkfläche (2) zugewandten Oberfläche (U) der mindestens einen Glasscheibe (I) ausgeübt wird, während die Glasscheibe (I) zwischen dem oberen Formgebungswerkzeug (3) und der unteren Biegeform (1) gepresst wird,
- Schritt (c) auf der Schwerkraftbiegeform (13) ausgeführt wird, auf welche die Glasscheibe (I) mit dem oberen Formgebungswerkzeug (3) abgelegt wird.

13. Verfahren nach einem der Ansprüche 10 bis 12, wobei zwei aufeinander liegende Glasscheiben (1,11) paarweise simultan gebogen werden.

14. Verwendung einer Membran (6) zur Erzeugung eines Überdrucks auf einer Oberfläche (O) einer Glasscheibe (I) während eines Biegeprozesses wobei die Membran (6) eine Öffnung (4) eines Hohlraums (5) eines oberen Formgebungswerkzeugs (3) verschließt und wobei der Überdruck erzeugt wird, indem die Membran (6) durch ein in den Hohlraum (5) eingeleitetes Gas in Richtung der Glasscheibe (I) verformt wird und die Oberfläche (O) der Glasscheibe (I) dadurch kontaktiert, wobei die Glasscheibe (I) angeordnet ist zwischen dem oberen Formgebungswerkzeug (3) und einer unteren Biegeform (1), die als Schwerkraftbiegeform mit einer rahmenartigen Wirkfläche (2) ausgebildet ist.

## Claims

1. Device for bending at least one glass pane (I) with a size of at least 0.8 m², in particular a vehicle window pane, at least comprising
- a lower bending mould (1) with a working surface (2) that is suitable for influencing the shape of at least one glass pane (I), wherein the lower bending mould (1) is implemented as a gravity bending mould with a frame-like working surface (2),
- an upper shaping tool (3) arranged opposite the working surface (2) that is suitable for generating a positive pressure on the surface (O) of the at least one glass pane (I) facing away from the working surface (2),
wherein the upper shaping tool (3) has a hollow space (5) with at least one opening (4) oriented toward the lower bending mould (1) and a membrane (6) closing the opening (4) and is equipped with means for introducing a gas into the hollow space (5) in order to deform the membrane (6) in the direction of the lower bending mould (1) and to thus generate the positive pressure.

2. Device according to claim 1, wherein the membrane (6) is gas permeable.

3. Device according to claim 1 or 2, wherein the membrane (6) is made of felt, fleece, or woven fabric.

4. Device according to claim 3, wherein the membrane (6) is metal-containing, preferably stainless steel-containing.

5. Device according to one of claims 1 through 4, wherein the membrane (6) has a thickness of 0.5 mm to 10 mm, preferably of 1 mm to 5 mm, particularly preferably of 2 mm to 3 mm.

6. Device according to one of claims 1 through 5, wherein the lower bending mould (1) has a full-surface working surface (2), which is equipped with openings in order to exert a sucking action on the surface (U) of the at least one glass pane (I) facing the working surface (2).

7. Device according to one of claims 1 through 6, wherein the upper shaping tool (3) has a cover (7) that forms the hollow space (5) with an edge section that surrounds the opening (4).

8. Device according to one of claims 1 through 6, wherein the upper shaping tool (3) has a wall (12) delimiting the hollow space (5) and oriented toward the lower bending mould (1), into which wall the openings (4) are introduced.

9. Device according to one of claims 1 through 8, wherein the upper shaping tool (3) has an air deflector plate (8) surrounding the opening (4) and means associated therewith for generating a sucking action such that the shaping tool (3) is suitable for sweeping the edge of the at least one glass pane (I) with a stream of air in order to suck it onto the upper shaping tool (3).

10. Method for bending at least one glass pane (I) with a size of at least 0.8 m², at least comprising the following process steps:
(a) Arranging at least one glass pane (I) heated to at least its softening temperature between a lower bending mould (1) and an upper shaping tool (3), wherein the lower bending mould (1) is implemented as a gravity bending mould with a frame-like working surface (2), and wherein the upper shaping tool (3) is arranged opposite the working surface (2) of the lower bending mould (1) and has a hollow space (5) with at least one opening (4) oriented toward the lower bending mould (1) and a membrane (6) closing the opening (4)
(b) Introducing a gas into the hollow space (5), by means of which the membrane (6) is deformed in the direction of the lower bending mould (1) such that the membrane (6) contacts the surface (O) of the at least one glass pane (I) facing away from the working surface (2) and generates a positive pressure on said surface (O),
(c) Cooling the glass pane (I).

11. Method according to claim 10, wherein the positive pressure is from 10 mbar to 50 mbar, preferably from 20 mbar to 30 mbar.

12. Method according to claim 10 or 11, wherein
- the glass pane (I) is pre-bent before step (a) on a gravity bending mould (13),
- the upper shaping tool (3) has a cover (7) that forms the hollow space (5), with an edge section that surrounds the opening (4), and an air deflector plate (8) surrounding the opening (4) and means associated therewith for generating a sucking action,
- the glass pane (I) is lifted in step (a) with the upper shaping tool (3) from the gravity bending mould, in that the shaping tool (3) sweeps the edge of the glass pane (I) with a stream of air,
- the lower bending mould (1) has a full-surface working surface (2), which is equipped with openings, through which a sucking action is exerted on the surface (U) of the at least one glass pane (I) facing the working surface (2), while the glass pane (I) is pressed between the upper shaping tool (3) and the lower bending mould (1),
- step (c) is carried out on the gravity bending mould (13), down onto which the glass pane (I) is placed with the upper shaping tool (3).

13. Method according to one of claims 10 through 12, wherein two glass panes (I,II) positioned one atop the other are simultaneously bent pairwise.

14. Use of a membrane (6) for generating a positive pressure on a surface (O) of a glass pane (I) during a bending process, wherein the membrane (6) closes an opening (4) of a hollow space (5) of a upper shaping tool (3) and wherein the positive pressure is generated in that the membrane (6) is deformed by means of a gas introduced into the hollow space (5) in the direction of the glass pane (I) and the surface (O) of the glass pane (I) is contacted thereby, wherein the glass pane (I) is arranged between the upper shaping tool (3) and a lower bending mould (1), that is implemented as a gravity bending mould with a frame-like working surface (2).

## Revendications

1. Dispositif pour le bombage d'au moins une feuille de verre (I) ayant une dimension d'au moins 0,8 m², en particulier d'une vitre de véhicule, comportant au moins :
- une forme de bombage inférieure (1) ayant une surface active (2), qui est appropriée pour influer sur la forme d'au moins d'une feuille de verre (I), la forme de bombage inférieure (1) étant réalisée en tant que forme de bombage par gravité ayant une surface active (2) en forme de cadre ;
- un outil de formage supérieur (3) disposé en regard de la surface active (2), qui est approprié pour générer une surpression sur la surface (O) de ladite au moins une feuille de verre (I) tournée à l'opposé de la surface active (2);
dans lequel l'outil de formage supérieur (3) présente un espace creux (5) ayant au moins une ouverture (4) tournée vers la forme de bombage inférieure (1) et une membrane (6) fermant l'ouverture (4) et est doté de moyens pour introduire un gaz dans l'espace creux (5) de façon à déformer la membrane (6) en direction de la forme de bombage inférieure (1) et à générer ainsi la surpression.

2. Dispositif selon la revendication 1, dans lequel la membrane (6) est perméable aux gaz.

3. Dispositif selon l'une des revendications 1 ou 2, dans lequel la membrane (6) est faite d'un feutre, d'un tissu non tissé ou d'un tissu.

4. Dispositif selon la revendication 3, dans lequel la membrane (6) contient un métal, de préférence contient de l'acier inoxydable.

5. Dispositif selon l'une des revendications 1 à 4, dans lequel la membrane (6) présente une épaisseur de 0,5 mm à 10 mm, de préférence de 1 mm à 5 mm, de façon particulièrement préférée de 2 mm à 3 mm.

6. Dispositif selon l'une des revendications 1 à 5, dans lequel la forme de bombage inférieure (1) présente une surface active en pleine surface (2) qui est dotée d'ouvertures pour exercer une action d'aspiration sur la surface (U) tournée vers la surface active (2) de ladite au moins une feuille de verre (I).

7. Dispositif selon l'une des revendications 1 à 6, dans lequel l'outil de formage supérieur (3) présente un recouvrement (7) qui forme l'espace creux (5) avec une section de bordure qui entoure l'ouverture (4).

8. Dispositif selon l'une des revendications 1 à 6, dans lequel l'outil de formage supérieur (3) présente une paroi (12) délimitant l'espace creux (5), tournée vers la forme de bombage inférieure (1), dans laquelle les ouvertures (4) sont ménagées.

9. Dispositif selon l'une des revendications 1 à 8, dans lequel l'outil de formage supérieur (3) présente une plaque déflectrice d'air (8) entourant l'ouverture (4) et des moyens associés à celle-ci pour générer une action d'aspiration de telle sorte que l'outil de formage (3) est approprié pour balayer la bordure de ladite au moins une feuille de verre (I) par un flux d'air, afin d'aspirer ladite au moins une feuille de verre (I) sur l'outil de formage supérieur (3).

10. Procédé pour le bombage d'au moins une feuille de verre (I) ayant une dimension d'au moins 0,8 m², comportant au moins les étapes de procédé suivantes :
(a) disposer au moins une feuille de verre (I) chauffée à au moins sa température de ramollissement entre une forme de bombage inférieure (1) et un outil de formage supérieur (3), la forme de bombage inférieure (1) étant réalisée en tant que forme de bombage par gravité ayant une surface active (2) en forme de cadre, et l'outil de formage supérieur (3) étant disposé en regard de la surface active (2) de la forme de bombage inférieure (1) et présentant un espace creux (5) ayant au moins une ouverture (4) tournée vers la forme de bombage inférieure (1) et une membrane (6) fermant l'ouverture (4) ;
(b) introduire un gaz dans l'espace creux (5), ce par quoi la membrane (6) est déformée en direction de la forme de bombage inférieure (1), de telle sorte que la membrane (6) vienne en contact avec la surface (O) de ladite au moins une feuille de verre (I) tournée à l'opposé de la surface active (2) et génère une surpression sur ladite surface (O) ;
(c) refroidir la feuille de verre (I).

11. Procédé selon la revendication 10, dans lequel la surpression s'élève à une valeur de 10 mbar à 50 mbar, de préférence à une valeur de 20 mbar à 30 mbar.

12. Procédé selon l'une des revendications 10 ou 11, dans lequel
- la feuille de verre (I) est pré-bombée avant l'étape (a) sur une forme de bombage par gravité (13) ;
- l'outil de formage supérieur (3) présente un recouvrement (7), qui forme l'espace creux (5) avec une section de bordure qui entoure l'ouverture (4), et une plaque déflectrice d'air (8) entourant l'ouverture (4), et des moyens associés à celle-ci pour exercer une action d'aspiration ;
- la feuille de verre (I) est soulevée à l'étape (a) par l'outil de formage supérieur (3) à partir de la forme de bombage par gravité en ce que l'outil de formage (3) balaie la bordure de la feuille de verre (I) par un flux d'air ;
- la forme de bombage inférieure (1) présente une surface active en pleine surface (2), qui est dotée d'ouvertures à travers lesquelles une action d'aspiration est exercée sur la surface (U) de ladite au moins une feuille de verre (I) tournée vers la surface active (2), pendant que la feuille de verre (I) est pressée entre l'outil de formage supérieur (3) et la forme de bombage inférieure (1) ;
- l'étape (c) est réalisée sur la forme de bombage par gravité (13) sur laquelle la feuille de verre (I) est déposée par l'outil de formage supérieur (3).

13. Procédé selon l'une des revendications 10 à 12, dans lequel deux feuilles de verre (I, II) reposant l'une sur l'autre sont bombées simultanément par paires.

14. Utilisation d'une membrane (6) pour exercer une surpression sur une surface (O) d'une feuille de verre (I) durant un processus de bombage, la membrane (6) fermant une ouverture (4) d'un espace creux (5) d'un outil de formage supérieur (3), et la surpression étant générée en ce que la membrane (6) est déformée en direction de la feuille de verre (I) par un gaz introduit dans l'espace creux (5) et vient ainsi en contact avec la surface (O) de la feuille de verre (I), la feuille de verre (I) étant disposée entre l'outil de formage supérieur (3) et une forme de bombage inférieure (1), qui est réalisée en tant que forme de bombage par gravité avec une surface active (2) en forme de cadre.
